# EUROPEAN PATENT APPLICATION

(11) **EP 4 852 163 A1**
(43) Date of publication of application: **09.12.2026**
(21) Application number: 26156277.1
(22) Date of filing: 04.02.2026
(51) Int. Cl.: H01M 50/107, H01M 50/117, H01M 50/152, H01M 50/159, H01M 50/184, H01M 50/188, H01M 50/55, H01M 50/586, H01M 50/593, H01M 50/559

(54) **SECONDARY BATTERY**

(30) Priority: 05.06.2025 KR 20250073832
(71) Applicant: SAMSUNG SDI CO., LTD., Yongin-si, Gyeonggi-do 17084 (KR)
(72) Inventor: JANG, Taewoong, Yongin-si, Gyeonggi-do 17084 (KR); MOON, Dongsik, Yongin-si, Gyeonggi-do 17084 (KR)
(74) Representative: Maiwald GmbH

(57) **Abstract**

A secondary battery (1) includes: an electrode assembly (100) including a first electrode (110), a separator (130), and a second electrode (120); a first electrode tab (111) connected to the first electrode; a second electrode tab (121) connected to the second electrode; a housing can (200) having one open side, and accommodating the electrode assembly; a cap assembly (300) coupled to the one open side of the housing can, the cap assembly including: a first electrode terminal (330) connected to the first electrode tab; a second electrode terminal (340) connected to the second electrode tab; and a cap plate (310) having a first terminal hole (311) through which the first electrode terminal is exposed outside, and a second terminal hole through which the second electrode terminal is exposed outside; and a first insulating member (410) on the electrode assembly, and to prevent a short circuit between the first electrode tab and the second electrode tab.

## Description

### BACKGROUND

### 1. Field

Aspects of embodiments of the present disclosure relate to a secondary battery.

### 2. Description of the Related Art

Recently, as the demand for wearable devices, such as Bluetooth-enabled headphones, earphones, smart watches, and body-attached medical devices, has increased, the demand for secondary batteries having high energy density and a sufficiently small size has increased. In this case, the secondary battery may have a height that is significantly smaller than its width, depending on the characteristics of the usage environment, and may include a housing can for accommodating an electrode assembly, and a cap assembly that is bonded to the top of the housing can to hermetically couple the electrode assembly from the outside.

During a high-temperature and high-humidity resistance evaluation, a short circuit due to moisture may occur between a cap plate and a terminal plate, depending on the placement state of a cap insulating layer, which may cause a problem with the safety of a battery.

The above information disclosed in this Background section is for enhancement of understanding of the background of the present disclosure, and therefore, it may contain information that does not constitute related (or prior) art.

### SUMMARY

Embodiments of the present disclosure may be directed to a secondary battery having improved safety.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to an aspect of the present disclosure, a secondary battery includes: an electrode assembly including a first electrode, a separator, and a second electrode; a first electrode tab connected to the first electrode; a second electrode tab connected to the second electrode; a housing can having one open side, and accommodating the electrode assembly; a cap assembly coupled to the one open side of the housing can, the cap assembly including: a first electrode terminal connected to the first electrode tab; a second electrode terminal connected to the second electrode tab; and a cap plate having a first terminal hole through which the first electrode terminal is exposed outside, and a second terminal hole through which the second electrode terminal is exposed outside; and a first insulating member on the electrode assembly, and configured to prevent a short circuit between the first electrode tab and the second electrode tab.

In an embodiment, the cap assembly may include a cap insulating layer having a first through-hole corresponding to the first terminal hole, and a second through-hole corresponding to the second terminal hole; the cap insulating layer may insulate between the first electrode terminal and the cap plate, and between the second electrode terminal and the cap plate; and the first electrode terminal may be inserted into the first terminal hole and the first through-hole, and the second electrode terminal may be inserted into the second terminal hole and the second through-hole.

In an embodiment, the first electrode terminal and the second electrode terminal may be spaced from each other.

In an embodiment, the first electrode terminal may include: a first bottom part connected to the first electrode tab; and a first terminal part protruding from the first bottom part, and inserted into the first terminal hole and the first through-hole. The second electrode terminal may include: a second bottom part connected to the second electrode tab; and a second terminal part protruding from the second bottom part, and inserted into the second terminal hole and the second through-hole.

In an embodiment, the cap insulating layer may include: a first recessed area recessed along a perimeter of the first through-hole; and a second recessed area recessed along a perimeter of the second through-hole. The first bottom part may be inserted into the first recessed area, and the second bottom part may be inserted into the second recessed area.

In an embodiment, the housing can and the cap plate may be electrically insulated from the first electrode and the second electrode.

In an embodiment, the housing can and the cap plate may include a same material as each other.

In an embodiment, the housing can and the cap plate may include a polymer material.

In an embodiment, the housing can and the cap plate may be bonded to each other by a thermal fusion.

In an embodiment, the housing can and the cap plate may include a metal material.

In an embodiment, the housing can and the cap plate may be bonded to each other by a metal bonding.

In an embodiment, the first terminal hole and the second terminal hole may have a symmetrical shape to each other.

In an embodiment, the first terminal hole and the second terminal hole may have a line-symmetrical shape to each other.

In an embodiment, the cap plate may further include a bridge part between the first terminal hole and the second terminal hole.

In an embodiment, the first electrode terminal may include at least one of stainless steel (SUS) or nickel (Ni).

In an embodiment, the second electrode terminal may include aluminum (Al).

In an embodiment, the first electrode tab may be bent and located between the first insulating member and the first electrode terminal, and the second electrode tab may be bent and located between the first insulating member and the second electrode terminal.

In an embodiment, the first insulating member may include: a disk-shaped base part; and a protrusion protruding from an upper surface of the disk-shaped base part.

In an embodiment, the protrusion may be located between one end of the first electrode tab and one end of the second electrode tab.

In an embodiment, the secondary battery may further include a second insulating member surrounding around an inner bottom surface and an inner side surface of the housing can.

According to some embodiments of the present disclosure, a short circuit between a first electrode and a second electrode may be prevented by spacing apart a first electrode terminal (e.g., a negative electrode terminal) and a second electrode terminal (e.g., a positive electrode terminal) included in a cap assembly from each other.

According to some embodiments of the present disclosure, because a cap assembly may include a first electrode terminal and a second electrode terminal, a material of a housing can and a cap plate for coupling the housing can may be variously modified as needed or desired.

According to some embodiments of the present disclosure, a housing can and a cap plate may be formed of a non-metallic material having a high strength, a high heat resistance, and a high chemical resistance.

According to some embodiments of the present disclosure, because a non-metallic housing can and cap plate may be bonded to each other by a thermal curing method instead of welding, a risk of damage to an electrode assembly accommodated inside the housing can due to welding may be prevented.

According to some embodiments of the present disclosure, an insulating member may be provided to prevent a short circuit between a first electrode tab and a second electrode tab.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating a secondary battery according to an embodiment of the present disclosure.
FIG. 2 is an exploded view illustrating a secondary battery according to an embodiment of the present disclosure.
FIG. 3 is a diagram illustrating a cross-section of the secondary battery taken along the line A-A of FIG. 1.
FIG. 4 is a perspective view illustrating a top surface of a cap assembly according to an embodiment of the present disclosure.
FIG. 5 is a perspective view illustrating a bottom surface of a cap assembly according to an embodiment of the present disclosure.
FIG. 6 is a perspective view illustrating a cap plate according to an embodiment of the present disclosure.
FIG. 7 is a perspective view illustrating a cap insulating layer according to an embodiment of the present disclosure.
FIG. 8 is a perspective view illustrating a first electrode terminal and a second electrode terminal according to an embodiment of the present disclosure.
FIG. 9 is a perspective view illustrating a first insulating member according to an embodiment of the present disclosure.
FIG. 10 is a cross-sectional view illustrating a secondary battery that further includes a second insulating member according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure, and are not intended to limit the present disclosure.

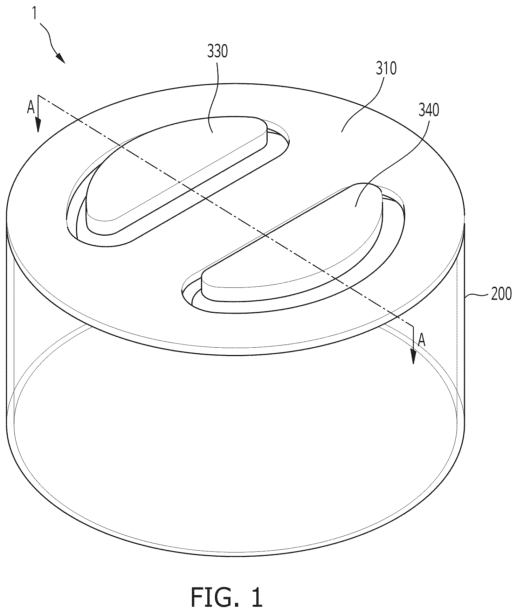

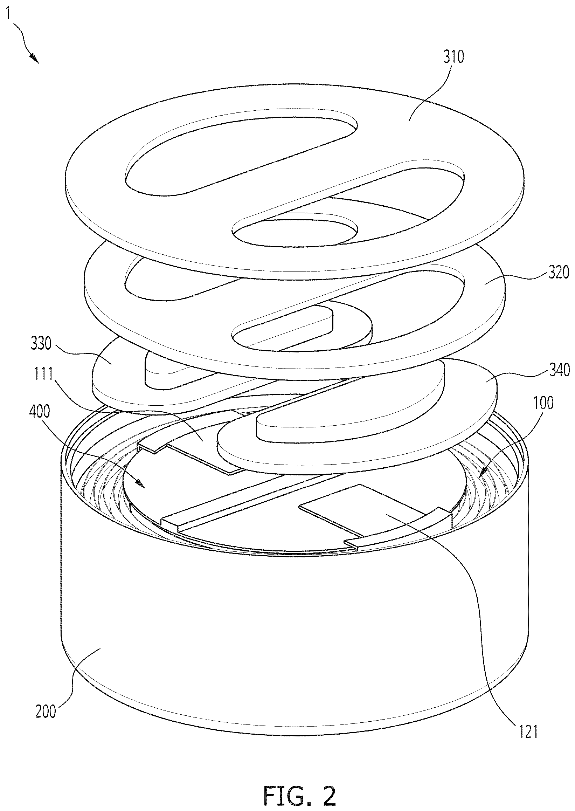

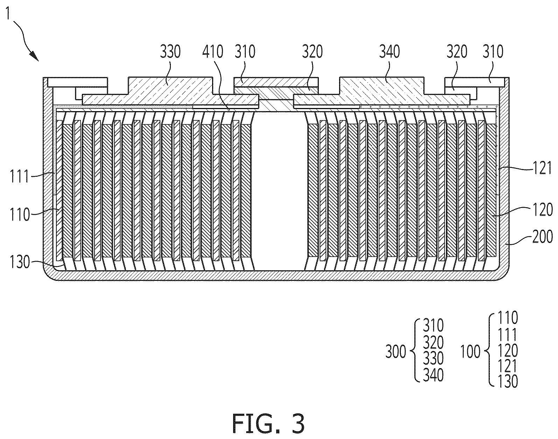

FIG. 1 is a perspective view illustrating a secondary battery according to an embodiment of the present disclosure. FIG. 2 is an exploded view illustrating a secondary battery according to an embodiment of the present disclosure. FIG. 3 is a diagram illustrating a cross-section of the secondary battery taken along the line A-A of FIG. 1.

According to an embodiment, a secondary battery 1 may be a coin cell or a button cell, but is not limited thereto, and may be a cylindrical or pin-type battery.

A coin cell or button cell is a battery in the shape of a thin coin or button, and may mean a battery in which a ratio of height to diameter (height/diameter) is less than or equal to 1, but is not limited thereto. Since a coin cell or a button cell is mainly cylindrical, a cross-section in a horizontal direction is circular, but is not limited thereto, and a shape in which a cross-section in a horizontal direction is elliptical or polygonal may also be included. At this time, the diameter may mean the maximum distance in the horizontal direction of the battery, and the height may mean the maximum distance in the vertical direction of the battery (the distance from a flat bottom surface to a flat top surface).

Referring to FIG. 1 to FIG. 3, the secondary battery 1 according to an embodiment of the present disclosure may include an electrode assembly 100, a first electrode tab 111 connected to a first electrode 110 of the electrode assembly 100, a second electrode tab 121 connected to a second electrode 120 of the electrode assembly 100, a housing can 200, a cap assembly 300, and a first insulating member 410.

According to an embodiment, the electrode assembly 100 may include the first electrode 110, the second electrode 120, and a separator 130. The first electrode 110 may be a negative electrode, and the second electrode 120 may be a positive electrode. However, the present disclosure is not limited thereto, and the opposite may be possible. For example, the electrode assembly 100 may be a wound-kind of electrode assembly 100 formed by winding the first electrode 110, the second electrode 120, and the separator 130, which is an insulator, interposed therebetween, but the present disclosure is not limited thereto.

According to an embodiment, the first electrode 110 may include a coating part, which is a region where an active material is coated on both surfaces (e.g., opposite surfaces) of a first base formed of a thin metal plate, and an uncoated part, which is a region where the first base is exposed without the active material being coated. The first electrode 110 may include uncoated parts formed on both side surfaces (e.g., opposite side surfaces) of the first base in a winding length direction. The first electrode 110 may form a negative electrode by coating a negative electrode active material, such as graphite or carbon, on a metal base, such as copper, a copper alloy, nickel, or a nickel alloy.

According to an embodiment, the second electrode 120 may include a coating part, which is a region where an active material is coated on both surfaces (e.g., opposite surfaces) of a second base formed of a thin metal plate, and an uncoated part, which is a region where the second base is exposed without an active material being coated. The second electrode 120 may include uncoated parts formed on both side surfaces (e.g., opposite side surfaces) of the second base in a winding length direction. The second electrode 120 may form a positive electrode by coating a positive electrode active material, such as a transition metal oxide, on a metal base, such as aluminum or an aluminum alloy.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5,and 0≤c≤0.05); LiₐNi_{1-b-c}CobX_{c}O_{2-α}D_{α} (0.90≤a≤1.8, 0≤b≤0.5,0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GeO₂ (0.90≤a≤1.8, 0≤b≤ 0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤ 0.1); LiₐMn₂G_{b}O₄ (0.90≤a≤1.8 and 0.001≤b≤0.1); LiₐMn_{1-g}G_{g}PO₄ (0.90≤a≤1.8 and 0≤ g≤0.5); Li_{(3-f)}Fe₂(PO₄)₃ (0≤f≤2); or LiₐFePO₄ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity(e.g., electrical conductivity) to the electrode. Any material that does not cause chemical change(e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity(e.g., electrical conductivity) to the electrode. Any material that does not cause chemical change(e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

According to an embodiment, the separator 130 may be located between the first electrode 110 and the second electrode 120. The separator 130 insulates the first electrode 110 and the second electrode 120 from each other, and may exchange lithium ions between the first electrode 110 and the second electrode 120. The separator 130 may have a sufficient length to completely insulate the first electrode 110 and the second electrode 120 from each other, even if the electrode assembly 100 contracts or expands during a charge and discharge process of the secondary battery 1.

According to an embodiment, the first electrode tab 111 may be on an outer surface of the electrode assembly 100. The first electrode tab 111 may be formed separately and connected to an uncoated part of the first electrode 110, or may be formed by punching out a part of the uncoated part.

According to an embodiment, the first electrode tab 111 may be bent on one surface of the electrode assembly 100 facing the cap assembly 300, and may be connected to a first electrode terminal 330 of the cap assembly 300. The first electrode 110 and the first electrode terminal 330 may be electrically connected to each other through the first electrode tab 111.

According to an embodiment, the second electrode tab 121 may be on an outer surface of the electrode assembly 100. The second electrode tab 121 may be formed separately and connected to an uncoated part of the second electrode 120, or may be formed by punching out a part of the uncoated part.

According to an embodiment, the second electrode tab 121 may be bent on one surface of the electrode assembly 100 facing the cap assembly 300, and may be connected to a second electrode terminal 340 of the cap assembly 300. The second electrode 120 and the second electrode terminal 340 may be electrically connected to each other through the second electrode tab 121.

According to an embodiment, the housing can 200 has one side that is open, and may accommodate the electrode assembly 100. The housing can 200 may form the overall external appearance of the secondary battery 1. For example, the housing can 200 may have an open cylindrical shape. The housing can 200 may include a circular bottom surface, and a side wall part vertically extending from a circumference of the bottom surface. A diameter of the bottom surface of the housing can 200 may be formed to be larger than a height of the side wall part, and the secondary battery 1 may be a button or coin kind of battery. In some embodiments, the diameter of the bottom surface of the housing can 200 may be formed to be smaller than the height of the side wall part.

According to an embodiment, an upper surface of the housing can 200 opposite to the bottom surface may be open, and a space for accommodating the electrode assembly 100 may be exposed. After the electrode assembly 100 is accommodated in the housing can 200, the cap assembly 300 may cover the open side of the housing can 200 to hermetically couple the electrode assembly 100. In an embodiment, an upper end of the side wall of the housing can 200 may have a step from the outside towards the inside. A cap plate 310 of the cap assembly 300 may be bonded to the upper end of the side wall of the housing can 200 by performing at least one of a thermal fusion (e.g., a UV curing) or a metal bonding (e.g., welding, brazing, soldering, or the like) while in contact with the step of the upper end of the side wall of the housing can 200, but the present disclosure is not limited thereto.

According to an embodiment, the housing can 200 may be insulated from the first electrode 110 and the second electrode 120. The housing can 200 may not be connected to the first electrode 110, the second electrode 120, the first electrode tab 111, and the second electrode tab 121, and may have no electrical polarity.

According to an embodiment, the cap assembly 300 may be coupled to the open side of the housing can 200. The cap assembly 300 may cover the open side of the housing can 200 to hermetically couple the electrode assembly 100 from the outside.

According to an embodiment, the cap assembly 300 may include the cap plate 310, a cap insulating layer 320, the first electrode terminal 330, and the second electrode terminal 340.

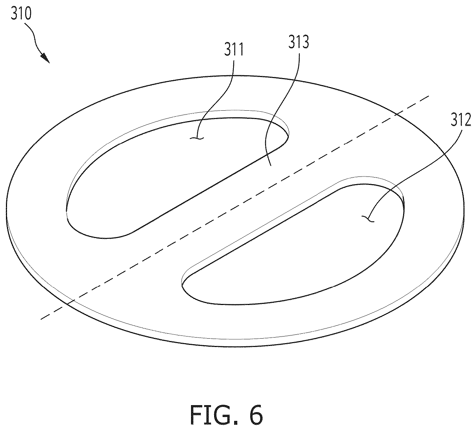

According to an embodiment, the cap plate 310 may include a first terminal hole 311 (e.g., refer to FIG. 6) through which the first electrode terminal 330 is exposed to the outside, and a second terminal hole 312 through which the second electrode terminal 340 is exposed to the outside. The first terminal hole 311 and the second terminal hole 312 may be formed in the cap plate 310 in a symmetrical or substantially symmetrical structure.

According to an embodiment, the cap plate 310 may be in contact with and bonded to the upper end of the side wall of the housing can 200. The cap plate 310 includes the same material as that of the housing can 200, and depending on the material, may be thermally fused to be bonded to the housing can 200, or may be metal-bonded to be bonded to the housing can 200.

In an embodiment, the housing can 200 and the cap plate 310 may include a polymer material, but the present disclosure is not limited thereto, and any suitable non-metallic material having a high strength, a high heat resistance, and a high chemical resistance may be applied. The housing can 200 and the cap plate 310 including a polymer material may be bonded to each other by a thermal fusion.

In another embodiment, the housing can 200 and the cap plate 310 may include a metal material. For example, the metal material may include stainless steel (SUS), aluminum, an aluminum alloy, or a nickel-plated steel, but the present disclosure is not limited thereto. The housing can 200 and the cap plate 310 including a metal material may be bonded to each other by a metal bonding.

According to an embodiment, the cap plate 310 may be insulated from the first electrode 110 and the second electrode 120. The cap plate 310 may be insulated from the first electrode 110, the second electrode 120, the first electrode tab 111, and the second electrode tab 121, and may have no electrical polarity.

According to an embodiment, the cap insulating layer 320 is on one side (e.g., a lower surface) of the cap plate 310, and may insulate the first electrode terminal 330 and the second electrode terminal 340 from the cap plate 310.

According to an embodiment, the first electrode terminal 330 may be connected to the first electrode tab 111. The first electrode terminal 330 may be exposed to the outside through the first terminal hole 311 of the cap plate 310. The first electrode terminal 330 may be inserted into the first terminal hole 311 of the cap plate 310. The first electrode terminal 330 may be spaced apart from the cap plate 310 in the first terminal hole 311, and may not be in contact with the cap plate 310.

According to an embodiment, the second electrode terminal 340 may be connected to the second electrode tab 121. The second electrode terminal 340 may be exposed to the outside through the second terminal hole 312 of the cap plate 310. The second electrode terminal 340 may be inserted into the second terminal hole 312 of the cap plate 310. The second electrode terminal 340 may be spaced apart from the cap plate 310 in the second terminal hole 312, and may not be in contact with the cap plate 310.

According to an embodiment, the first insulating member 410 may be on the electrode assembly 100. The first insulating member 410 may prevent a short circuit between the first electrode tab 111 and the second electrode tab 121. In an embodiment, the first electrode tab 111 and the second electrode tab 121 may be bent toward a winding axis of the electrode assembly 100. The first insulating member 410 may be extending along a radial direction between one end of the bent first electrode tab 111 and one end of the bent second electrode tab 121 facing each other, thereby preventing a short circuit between the first electrode tab 111 and the second electrode tab 121.

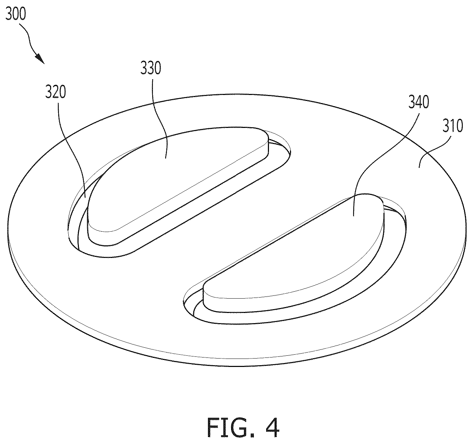

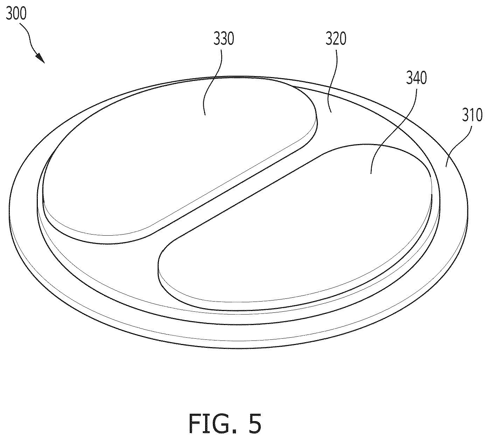

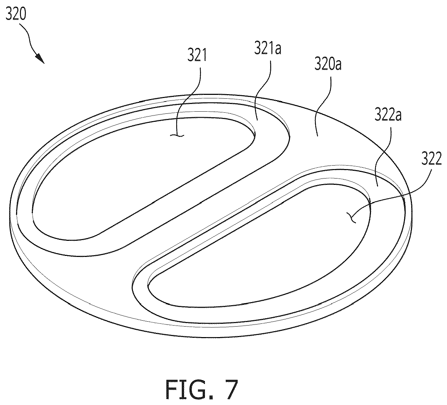

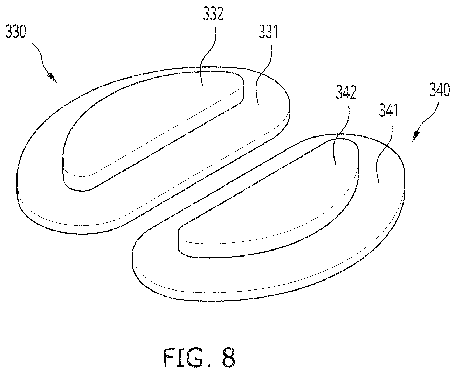

FIG. 4 is a perspective view illustrating a top surface of a cap assembly according to an embodiment of the present disclosure. FIG. 5 is a perspective view illustrating a bottom surface of a cap assembly according to an embodiment of the present disclosure. FIG. 6 is a perspective view illustrating a cap plate according to an embodiment of the present disclosure. FIG. 7 is a perspective view illustrating a cap insulating layer according to an embodiment of the present disclosure. FIG. 8 is a perspective view illustrating a first electrode terminal and a second electrode terminal according to an embodiment of the present disclosure.

Referring to FIG. 4 to FIG. 8, a cap assembly 300 according to an embodiment of the present disclosure may include a cap plate 310, a cap insulating layer 320, a first electrode terminal 330, and a second electrode terminal 340.

According to an embodiment, the cap plate 310 may be on the cap insulating layer 320. The cap plate 310 may be bonded to the housing can 200, while covering the open side of the housing can 200. The first electrode terminal 330 may be exposed to the outside through the first terminal hole 311 formed in the cap plate 310. The second electrode terminal 340 may be exposed through the second terminal hole 312 formed in the cap plate 310.

According to an embodiment, the cap insulating layer 320 may be disposed between the cap plate 310 and the first electrode terminal 330, and between the cap plate 310 and the second electrode terminal 340. The cap insulating layer 320 may insulate between the cap plate 310 and the first electrode terminal 330, and between the cap plate 310 and the second electrode terminal 340.

As shown in FIG. 6, the cap plate 310 according to an embodiment may include the first terminal hole 311 through which the first electrode terminal 330 is exposed to the outside, and the second terminal hole 312 through which the second electrode terminal 340 is exposed to the outside.

According to an embodiment, the first terminal hole 311 and the second terminal hole 312 may have a symmetrical or substantially symmetrical shape to each other. In an embodiment, the first terminal hole 311 and the second terminal hole 312 may have a line-symmetrical shape to each other.

According to an embodiment, the cap plate 310 may further include a bridge part 313 formed between the first terminal hole 311 and the second terminal hole 312. The bridge part 313 may be formed in a bar shape, but the present disclosure is not limited thereto. The first terminal hole 311 and the second terminal hole 312 may have a symmetrical or substantially symmetrical shape to each other with respect to the bridge part 313 as a reference.

As shown in FIG. 7, the cap insulating layer 320 according to an embodiment may include a first through-hole 321 corresponding to the first terminal hole 311, and a second through-hole 322 corresponding to the second terminal hole 312. The cap insulating layer 320 may include, on a lower surface thereof, a first recessed area 321a recessed along the perimeter (e.g., the circumference) of the first through-hole 321, and a second recessed area 322a recessed along the perimeter (e.g., the circumference) of the second through-hole 322.

According to an embodiment, a first bottom part 331 of the first electrode terminal 330 may be inserted into the first recessed area 321a. In an embodiment, the first bottom part 331 of the first electrode terminal 330 may be fitted and fixed into the recessed area 321a formed around the first through-hole 321.

According to an embodiment, a second bottom part 341 of the second electrode terminal 340 may be inserted into the second recessed area 322a. In an embodiment, the second bottom part 341 of the second electrode terminal 340 may be fitted and fixed into the recessed area 322a formed around the second through-hole 322.

According to an embodiment, an adhesive member may be applied to the first recessed area 321a and the second recessed area 322a, and the first bottom part 331 of the first electrode terminal 330 and the second bottom part 341 of the second electrode terminal may be in contact and fixed thereto, but the present disclosure is not limited thereto.

As shown in FIG. 8, the first electrode terminal 330 and the second electrode terminal 340 according to an embodiment may have a symmetrical or substantially symmetrical structure to each other.

According to an embodiment, the first electrode terminal 330 may include the first bottom part 331 connected to the first electrode tab 111 (e.g., refer to FIG. 2), and the first terminal part 332 protruding from the first bottom part 331 and inserted into the first terminal hole 311 and the first through-hole 321.

According to an embodiment, a lower surface of the first bottom part 331 may be connected to the first electrode tab 111. An upper surface and a part of a side surface of the first bottom part 331 may be in contact with the first recessed area 321a formed along a perimeter (e.g., a circumference) of the first through-hole 321.

According to an embodiment, the first terminal part 332 is inserted into the first terminal hole 311 and the first through-hole 321, and may be exposed to the outside. The first terminal part 332 is exposed to the outside, and may be connected to an external device (e.g., a battery protection module).

According to an embodiment, the second electrode terminal 340 may include the second bottom part 341 connected to the second electrode tab 121 (e.g., refer to FIG. 2), and the second terminal part 342 protruding from the second bottom part 341 and inserted into the second terminal hole 312 and the second through-hole 322.

According to an embodiment, a lower surface of the second bottom part 341 may be connected to the second electrode tab 121. An upper surface and a part of a side surface of the second bottom part 341 may be in contact with the second recessed area 322a formed along a perimeter (e.g., a circumference) of the second through-hole 322.

According to an embodiment, the second terminal part 342 is inserted into the second terminal hole 312 and the second through-hole 322, and may be exposed to the outside. The second terminal part 342 is exposed to the outside, and may be connected to an external device (e.g., a battery protection module).

According to an embodiment, the first electrode terminal 330 may include at least one of stainless steel (SUS) or nickel (Ni). The second electrode terminal 340 may include aluminum (Al). However, the present disclosure is not limited thereto, and the first electrode terminal 330 may include the same material as that of a metal base of the first electrode 110, and the second electrode terminal 340 may include the same material as that of a metal base of the second electrode 120. In another embodiment, if (e.g., when) the first electrode 110 is a positive electrode and the second electrode 120 is a negative electrode, the first electrode terminal 330 may include aluminum (Al), and the second electrode terminal 340 may include at least one of stainless steel (SUS) or nickel (Ni).

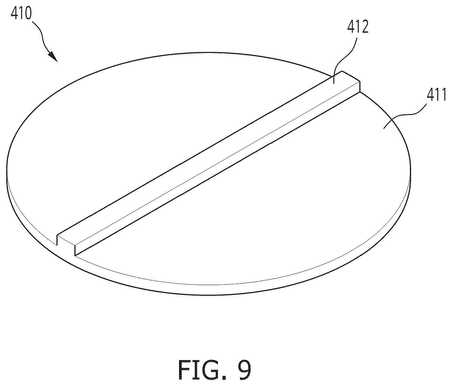

FIG. 9 is a perspective view illustrating a first insulating member according to an embodiment of the present disclosure.

Referring to FIG. 2 and FIG. 9, the first insulating member 410 according to an embodiment of the present disclosure may be on the electrode assembly 100. The first insulating member 410 may be disposed between the electrode assembly 100 and the first electrode tab 111, between the electrode assembly 100 and the second electrode tab 121, and between the first electrode tab 111 and the second electrode tab 121.

According to an embodiment, the first insulating member 410 may include a disk-shaped base part 411, and a protrusion 412 protruding from an upper surface of the base part 411. For example, the protrusion 412 may extend along a radial direction of the base part 411. As another example, the protrusion 412 may be formed to be offset from the radial direction of the base part 411. While a single protrusion 412 is shown in FIG. 9, the present disclosure is not limited thereto, and the protrusion 412 may be formed in a plurality.

As an example, the first electrode tab 111 may be bent on one surface of the electrode assembly 100, may be disposed on the base part 411 of the first insulating member 410, and may be connected to the first electrode terminal 330. The second electrode tab 121 may be bent on one surface of the electrode assembly 100, may be disposed on the base part 411 of the first insulating member 410, and may be connected to the second electrode terminal 340.

According to an embodiment, the protrusion 412 may be disposed between one end of the bent first electrode tab 111 and one end of the bent second electrode tab 121. For example, the protrusion 412 may extend along the radial direction of the base part 411, and may be disposed between one end of the bent first electrode tab 111 and one end of the bent second electrode tab 121. The protrusion 412 may prevent a short circuit between the first electrode tab 111 and the second electrode tab 121.

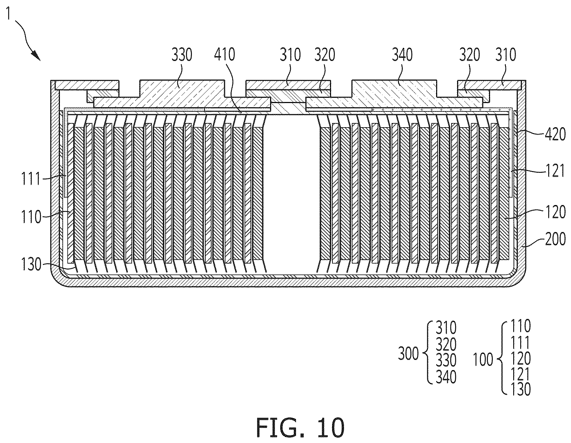

FIG. 10 is a cross-sectional view illustrating a secondary battery that further includes a second insulating member according to an embodiment of the present disclosure. Hereinafter, a secondary battery illustrated in FIG. 10 will be described in more detail by mainly focusing on differences from the secondary battery described above with reference to FIG. 2, and redundant description of the same or substantially the same components as those of the secondary battery described above with reference to FIG. 2 may not be repeated.

Referring to FIG. 10, the housing can 200 and the cap plate 310 may include a metal material, and may be connected to each other by welding. For example, when the electrode assembly 100 is accommodated inside a metal housing can 200, a short circuit may occur due to the first electrode 110 or the second electrode 120 being in contact with the housing can 200.

To prevent such as short circuit, as shown in FIG. 10, a secondary battery 1 according to an embodiment may further include a second insulating member 420 to surround (e.g., around peripheries of) a bottom surface and an inner side surface of the inside of the housing can 200. The second insulating member 420 may be interposed between the electrode assembly 100 and the housing can 200, and may insulate between the electrode assembly 100 and the housing can 200.

Although the present disclosure has been described above with respect to embodiments thereof, the present disclosure is not limited thereto. Various modifications and variations can be made by those skilled in the art within the spirit of the present disclosure and the equivalent scope of the appended claims.

## Claims

1. A secondary battery (1) comprising:
an electrode assembly (100) comprising a first electrode (110), a separator (130), and a second electrode (120);
a first electrode tab (111) connected to the first electrode (110);
a second electrode tab (121) connected to the second electrode (120);
a housing can (200) having one open side, and accommodating the electrode assembly (100);
a cap assembly (300) coupled to the one open side of the housing can (200), the cap assembly (300) comprising:
a first electrode terminal (330) connected to the first electrode tab (111);
a second electrode terminal (340) connected to the second electrode tab (121); and
a cap plate (310) having a first terminal hole (311) through which the first electrode terminal (330) is exposed outside, and a second terminal hole (312) through which the second electrode terminal (340) is exposed outside; and
a first insulating member (410) on the electrode assembly (100), and configured to prevent a short circuit between the first electrode tab (111) and the second electrode tab (121).

2. The secondary battery (1) as claimed in claim 1, wherein:
the cap assembly (300) comprises a cap insulating layer (320) having a first through-hole (321) corresponding to the first terminal hole (311), and a second through-hole (322) corresponding to the second terminal hole (312);
the cap insulating layer (320) insulates between the first electrode terminal (330) and the cap plate (310), and between the second electrode terminal (340) and the cap plate (310); and
the first electrode terminal (330) is inserted into the first terminal hole (311) and the first through-hole (321), and the second electrode terminal (340) is inserted into the second terminal hole (312) and the second through-hole (322).

3. The secondary battery (1) as claimed in claim 2, wherein:
the first electrode terminal (330) comprises:
a first bottom part (331) connected to the first electrode tab (111); and
a first terminal part (332) protruding from the first bottom part (331), and inserted into the first terminal hole (311) and the first through-hole (321); and the second electrode terminal (340) comprises:
a second bottom part (341) connected to the second electrode tab (121); and
a second terminal part (342) protruding from the second bottom part (341), and inserted into the second terminal hole (312) and the second through-hole (322).

4. The secondary battery (1) as claimed in claim 3, wherein the cap insulating layer (320) comprises:
a first recessed area (321a) recessed along a perimeter of the first through-hole (321); and
a second recessed area (322a) recessed along a perimeter of the second through-hole (322), and
wherein the first bottom part (331) is inserted into the first recessed area (321a), and the second bottom part (341) is inserted into the second recessed area (322a).

5. The secondary battery (1) as claimed in any one of the preceding claims, wherein the housing can (200) and the cap plate (310) are electrically insulated from the first electrode (110) and the second electrode (120).

6. The secondary battery (1) as claimed in any one of the preceding claims, wherein the housing can (200) and the cap plate (310) comprise a same material as each other.

7. The secondary battery (1) as claimed in claim 6, wherein the housing can (200) and the cap plate (310) comprise a polymer material;
wherein preferably the housing can (200) and the cap plate (310) are bonded to each other by a thermal fusion.

8. The secondary battery (1) as claimed in claim 6, wherein the housing can (200) and the cap plate (310) comprise a metal material;
wherein preferably the housing can (200) and the cap plate (310) are bonded to each other by a metal bonding.

9. The secondary battery (1) as claimed in any one of the claims 2 to 8, wherein the first terminal hole (311) and the second terminal hole (312) have a symmetrical shape, preferably a line-symmetrical shape, to each other.

10. The secondary battery (1) as claimed in any one of the preceding claims, wherein the cap plate (310) further comprises a bridge part (313) between the first terminal hole (311) and the second terminal hole (312).

11. The secondary battery as claimed in any one of the preceding claims, wherein the first electrode terminal comprises at least one of stainless steel (SUS) or nickel (Ni).

12. The secondary battery as claimed in any one of the preceding claims, wherein the second electrode terminal comprises aluminum (Al).

13. The secondary battery (1) as claimed in any one of the preceding claims, wherein the first electrode tab (111) is bent and located between the first insulating member (410) and the first electrode terminal (330), and the second electrode tab (121) is bent and located between the first insulating member (410) and the second electrode terminal (340).

14. The secondary battery (1) as claimed in any one of the preceding claims, wherein the first insulating member (410) comprises:
a disk-shaped base part (411); and
a protrusion (412) protruding from an upper surface of the disk-shaped base part (411),
wherein preferably the protrusion (412) is located between one end of the first electrode tab (111) and one end of the second electrode tab (121).

15. The secondary battery (1) as claimed in any one of the claims 8 to 14, further comprising a second insulating member (420) surrounding around an inner bottom surface and an inner side surface of the housing can (200).
